(19) Europäisches Patentamt
European Patent Office
Office européen des brevets

(11) Veröffentlichungsnummer: **0 337 206**
**A2**

(12) # EUROPÄISCHE PATENTANMELDUNG

(21) Anmeldenummer: **89105653.3**

(22) Anmeldetag: **30.03.89**

(51) Int. Cl.4: **C08L 69/00 , //(C08L69/00, 75:04,51:04)**

(30) Priorität: **12.04.88 DE 3812051**

(43) Veröffentlichungstag der Anmeldung: **18.10.89 Patentblatt 89/42**

(84) Benannte Vertragsstaaten: **DE FR GB IT NL**

(71) Anmelder: **BAYER AG**

**D-5090 Leverkusen 1 Bayerwerk(DE)**

(72) Erfinder: **Nouvertné, Werner, Dr.**
**Scheiblerstrasse 95**
**D-4150 Krefeld 1(DE)**
Erfinder: **Gielen, Franz-Josef**
**Niersweg 29**
**D-4150 Krefeld(DE)**
Erfinder: **Tacke, Peter, Dr.**
**Brandenburger Strasse 12**
**D-4150 Krefeld 12(DE)**
Erfinder: **Grigo, Ulrich, Dr.**
**Michelsheide 9**
**D-4152 Kempen 3(DE)**
Erfinder: **Quiring, Bernd, Dr.**
**Albrecht-Haushofer-Strasse 2**
**D-5090 Leverkusen 1(DE)**
Erfinder: **Lindner, Christian, Dr.**
**Riehler Strasse 200**
**D-5000 Köln 60(DE)**

(54) **Mischungen von thermoplastischen Poly(ester)carbonaten mit thermoplastischen Polyurethanen.**

(57) Gegenstand der vorliegenden Erfindung sind Mischungen von thermoplastischen aromatischen Poly(ester)-carbonaten, thermoplastischen Polyurethanen mit einem Gehalt an speziellen Pfropfpolymeren und gegebenenfalls mit geeigneten Zusatzstoffen, ein Verfahren zu ihrer Herstellung sowie die Verwendung der erfindungsgemäßen Mischungen zur Herstellung von Formkörpern, insbesondere durch Spritzguß oder Extrusion.

EP 0 337 206 A2

Xerox Copy Centre

# Mischungen von thermoplastischen Poly(ester)carbonaten mit thermoplastischen Polyurethanen

Gegenstand der vorliegenden Erfindung sind Mischungen enthaltend

A) 45 bis 87 Gew.-%, vorzugsweise 55 bis 82 Gew.-% thermoplastischer, aromatischer Poly(ester)-carbonate,

B) 30 bis 12 Gew.-%, vorzugsweise 25 bis12 Gew.-% thermoplastischer Polyurethane und

C) 25 bis 1 Gew.-%, vorzugsweise 20 bis 6 Gew.-% Pfropfpolymerer, erhältlich durch bekannte Pfropfung von

C1) 5 bis 30, vorzugsweise 10 bis 30 Gew.-Teilen (Meth)Acrylsäurealkylestern auf

C2) 95 bis 70, vorzugsweise 90 bis 70 Gew.-Teile an vernetzten Dienkautschuken wobei die Summe aus C1) + C2) jeweils 100 Gew.-Teile beträgt, und wobei der mittlere Teilchendurchmesser $d_{50}$ der vernetzten Dienkautschuke C2) von 0,2 1m bis 0,6 µm, vorzugsweise von 0,3 µm bis 0,5 µm und insbesondere 0,4 µm ist.

(Zur Bestimmung des mittleren Teilchendurchmessers $d_{50}$ siehe beispielsweise W. Scholtan und H. Lange, Kolloid-Z und Z. Polymere 250 (1972) 782-796 bzw. G. Kämpf, H. Schuster, Angew. Makromolekulare Chemie 14 (1070), S. 111-129).

Aromatische Poly(ester)carbonate im Sinne der vorliegenden Erfindung sind sowohl aromatische Polycarbonate ohne eingebaute aromatische Dicarbonsäurereste als auch aromatische Polyestercarbonate, in denen maximal 50 Mol-% der Carbonat-Reste durch aromatische Dicarbonsäurereste ersetzt sind.

Mischungen aus Polycarbonat und 0,25 bis 50 % eines Polyurethans sowie 0,01 bis 2,0 % eines Pfropfpolymeren (Alkenylcyanid und Vinylaromaten auf Polybutadien) sind gemäß DE-OS 2 304 214 bzw. US-Patent 3 813 358 bekannt. Die Abmischungen haben verbesserte Oberflächeneigenschaften.

US-PS 4 169 479 beschreibt thermoplastische Polyurethanelastomermischungen aus 40 bis 100 % eines thermoplas tischen Polyurethans, 0 bis 60 % eines thermoplastischen Polymeren (Polycarbonat) und 0,5 bis 10 % eines Acrylpolymeren. Die Produkte zeichnen sich durch eine gute Homogenität der Mischung und die Formteile durch einen verbesserten Glanz aus. Als Acrylpolymere sind keine Pfropfpolymeren subsummiert.

Aus dem US-Patent 4 350 799 bzw. dem EP-A 0 074 594 sind Mischungen von thermoplastischen Polyurethanen, thermoplastischen Polyphosphonaten und thermoplastischen Polycarbonaten bekannt, welche eine verbesserte Flammwidrigkeit besitzen.

Aus der EP-OS 0 104 695 sind Mischungen aus einem oder mehreren Pfropfpolymerisaten, einem oder mehreren Copolymerisaten, einem oder mehreren Polycarbonaten und einem oder mehreren Polyurethanen, bekannt. Derartigen Mischungen werden eine gute Benzinbeständigkeit, gute Verarbeitungseigenschaften und ein gutes Fließverhalten zugeschrieben.

Als Polyurethane kommen elastische Polyurethane in Betracht (Seite 7, Absatz 4 von EP 0 104 695). Als Kautschukgrundlage für die Herstellung der Pfropfpolymerisate sind Polybutadien, Butadien-Styrol, Butadien-Acrylnitril oder Butadien-Acrylat-Kautschuke besonders erwähnt. (Seite 3, Zeilen 22/24 von EP 0 104 695).

Die Pfropfmonomeren sind Mischungen von 20 bis 40 Gew.-% Acrylverbindungen mit 80 bis 60 Gew.-% Vinylaromaten und gegebenenfalls 0 bis 20 Gew.-% andere ungesättigte Verbindungen geeignet.

Als Acrylverbindungen sind u.a. Alkylacrylate und Alkylmethacrylate oder deren Mischungen geeignet. (Seite 2. letzter Absatz von EP 0 104 695).

Aus der EP-A 0 125 739 sind Abmischungen von 50 bis 95 Gew.-Teilen an Polycarbonaten oder Polyestern, 2,5 bis 15 Gew.-Teilen an thermoplastischen Polyurethanen und 2,5 bid 35 Gew.-Teilen von Ethylen-Propylen-Dienkautschuken, die mit ethylenisch ungesättigten Verbindungen behandelt worden sind, welche Carboxyl-Gruppen enthalten oder bilden können. (Meth)acrylsäureester sind in diesem Zusammenhang nicht erwähnt. Die Formmassen gemäß EP 0 125 739 haben jedoch noch erhebliche Nachteile (siehe Tabelle 2, Versuche 11 und 12).

Die DE-OS 3 521 407 (Le A 23 628) beschreibt thermoplastische Formmassen mit verbesserter Fließnahtfestigkeit.

Die Formmassen enthalten thermoplastische Polycarbonate, zwei verschiedenen Pfropfpolymerisate und ein Copolymerisat und gegebenenfalls Additive wie Stabilisatoren, Pigmente, Fließmittel, Entformungsmittel, Flammschutzmittel und/oder Antistatika. Als Pfropfmonomere sind Methylmethacrylat erwähnt, als zu pfropfende Kautschuke eignet sich beispielsweise Polybutadien.

Als Fließhilfsmittel wird ein thermoplastisches Polyurethan eingesetzt, und zwar in Mengen von 2 Gew.-Teilen pro 100 Gew.-Teile der Formmasse aus Polycarbonat, Pfropfpolymerisaten und Copolymerisat.

Aus der DE-OS 3 521 408 (Le A 23 887) sind Formmassen aus Polycarbonaten (A), Pfropfpolymerisaten (B) und gegebenenfalls Copolymerisaten (C) bekannt, die 0,5 bis 10 Gew.-Teile, bezogen auf 100 Gew.-Teile der Formmasse aus (A) + (B) und gegebenenfalls (C), eines speziellen Polyurethans enthalten; die resultierenden Produkte zeigen eine verbesserte Fließfähigkeit bei guter Thermostabilität.

Insgesamt kann man sagen, daß die Verträglichkeit von Polycarbonat-Polyurethan-Abmischungen den derzeitigen Anforderungen in der Praxis noch nicht genügt. Nach dem Spritzgießverfahren daraus hergestellte Formteile zeigen noch erhebliche Abschieferungen, Oberflächenstörungen, Fließnahtschatten und, falls die optimalen Verarbeitungsbedingungen nicht ganz exakt eingehalten werdne, auch schlechte Fließnahtfestigkeiten. Die Schwierigkeiten werden noch verstärkt bei einer eventuellen Farbpigmentierung der Formmassen des Stande der Technik.

Es wurde nun überraschend gefunden, daß Gemische aus Polycarbonaten, thermoplastischen Polyurethanen und aus Pfropfpolymeren von (Meth)acrylsäureestern auf vernetzte Dienkautschuke bestimmter Teilchengröße die oben genannten Nachteile nicht besitzen. Man erreicht eine hervorragende Verträglichkeit und Formteiloberfläche. Dies gilt auch bei Einsatz von Polyestercarbonaten anstelle von Polycarbonaten. Daraus hergestellte Formkörper zeigen insbesondere eine verbesserte Resistenz gegen Treibstoffe, wodurch sie bevorzugt im Kraftfahrzeugbau eingesetzt werden können.

Komponente A

Thermoplastische, aromatische Poly(ester)carbonate gemäß vorliegender Erfindung sind Reaktionsprodukte von Diphenolen mit Kohlensäurederivaten, wie Phosgen und Diarylcarbonaten, und gegebenenfalls aromatischen Dicarbonsäurederivaten.

Die aromatischen Poly(ester)carbonate können Homopolycarbonate oder Copolycarbonate sein, sie können linear oder verzweigt sein. Bis maximal 50 Mol-% der Carbonatgruppen können, wie bereits erwähnt, durch aromatische Estergruppen ersetzt sein, wobei sowohl statistische als auch eine blockartige Verteilung möglich ist.

Die als Komponenten A) geeigneten Poly(ester)carbonate sind literaturbekannt oder nach literaturbekannten Verfahren herstellbar. (Siehe beispielsweise US-Patente 3 028 365, 3 275 601, H. Schnell, "Chemistry and Physics of Polycarbonates", Interscience Publishers, New York, G.S. Kolesnikow et al., J. Polym. Sci., USSR, Vol. 9, 1967, Seiten 1705-1711, US-Patente 3 169 121, 3 409 704, DE-OS 2 714 544, DE-OS 2 758 030 und EP-OS 36 080 (Le A 20 203)).

Geeignete Diphenole zur Herstellung der Poly(ester)carbonate gemäß Komponente A) sind solche der Formel (I) HO-Z-OH (I), worin Z ein zweibindiger aromatischer, ein-oder mehrkerniger, gegebenenfalls annellierter Rest mit vorzugsweise 6 bis 30 C-Atomen ist.

Bevorzugte Diphenole sind Verbindungen der Formel (II)

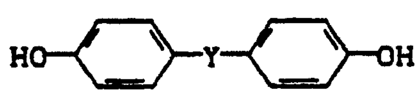

(II),

in der

Y eine Einfachbindung, einen Alkylen- oder Alkylidenrest mit 1-7 C-Atomen, einen Cycloalkylen- oder Cycloalkylidenrest mit 5-12 C-Atomen, -O-, -S-,

$-\underset{O}{\underset{\|}{S}}-$, $-SO_2-$, oder $-\underset{O}{\underset{\|}{C}}-$

bedeutet, sowie deren kernhalogenierte Derivate.

Beispiele für Diphenole sind

Hydrochinon,
Resorcin,
Dihydroxdiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,

Bis-(hydroxyphenyl)-sulfone und
α,α′-Bis-(hydroxyphenyl)-diisopropylbenzole,
sowie deren kernhalogenierte Verbindungen.

Beispiele für Diphenole sind
4,4′-Dihydroxydiphenyl,
2,4-Bis-(4-hydroxyphenyl)-2-methylbutan,
α,α′-Bis-(4-hydroxyphenyl)-p-diisopropylbenzol,
2,2-Bis-(3-chlor-4-hydroxyphenyl)-propan,
2,2-Bis-(4-hydroxyphenyl)-propan,
2,2-Bis-(3,5-dichlor-4-hydroxyphenyl)-propan,
2,2-Bis-(3,4-dibrom-4-hydroxyphenyl)-propan und
1,1-Bis-(4-hydroxyphenyl)-cyclohexan.

Diese Diphenole sind literaturbekannt oder nach bekannten Verfahren herstellbar; sie können sowohl allein als auch im Gemisch zur Herstellung der Polycarbonate bzw. der Polyestercarbonate eingesetzt werden.

Die Verzweigung der aromatischen Polycarbonate bzw. Polyestercarbonate gemäß Komponente A) kann durch den Einbau gringer Mengen mehr als zweifunktioneller Verbindungen in bekannter Weise erfolgen.
(Siehe beispielsweise DE-OS 1 570 533, US-CIP-RE-27 682 und DE-OS 3 007 934).

Hierbei werden für die Verzweigung der aromatischen Polycarbonate 0,05 bis 2,0 Mol-%, bezogen auf Mole eingesetzte Diphenole, an Verzweiger eingesetzt.

Für die Verzweigung der aromatischen Polyestercarbonate werden 0,01 bis 1 Mol-%, bezogen auf Mole eingesetzte Dicarbonsäuredichloride bzw. auf Mole eingesetzt Diphenole eingesetzt, je nach dem ob man Polycarbonsäurechloride oder Polyphenole als Verzweiger einsetzt.

Einige der bevorzugten Verbindungen mit mehr als zwei phenolischen Hydroxygruppen sind beispielsweise Phoroglucin,
4,6-Dimethyl-2,4,6-tri-(4-hyroxyphenyl)-heptan, 1,3,5-Tri-(4-hyroxyphenyl)-benzol, 1,1,1-tri-(4-hydroxyphenyl)-ethan, Tri-(4-hydroxyphenyl)-phenylmethan, 2,2-Bis-([4,4-bis-(4-hydroxyphenyl)-cyclohexyl]-propan, 2,6-Bis-(2′-hydroxy-5′-methyl-benzyl)-4-methylphenol, 2-(4-hydroxyphenyl)-2-(2,4-dihydroxyphenyl)-propan, Hexa-(4-hydroxyphenylisopropyl)phenyl)-ortho-terephthalsäureester, Tetra-(4-hydroxyphenyl)-methan, Tetra-(4-(4-hydroxyphenylisopropyl)-phenoxy)-methan und 1,4-Bis-((4′,4″-dihydroxytriphenyl)-methyl)-benzol.

Andere dreifunktionelle Verbindungen für die Verzweigung von Polycarbonaten sind beispielsweise 2,4-Dihydroxybenzoesäure, Trimesinsäure, Cyanurchlorid und 3,3-Bis-(4-hydroxy-3-methyl-phenyl)-2-oxo-2,3-dihydroindol.

Für die Verzweigung der Polyestercarbonate eignen sich einerseits die vorstehend genannten Polyphenole mit mehr als zwei phenolischen OH-Gruppen, aber auch die folgenden 3- oder mehr als 3-funktionellen Carbonsäurechloride wie Trimesinsäuretrichlorid, Cyanursäuretrichlorid, 3,3′, 4,4′-Benzophenoln-tetracarbonsäuretetrachlorid, 1,4,5,8-Naphthalintetracarbonsäuretetrachlorid oder Pyromellithsäuretetrachlorid.

Die genannten Verzweiger sind literaturbekannt oder nach literaturbekannten Verfahren herstellbar.

Die aromatischen Polycarbonate und Polyestercarbonate gemäß Komponente A) haben im allgemeinen relative Lösungsviskositäten von 1,16 bis 1,5, vorzugsweise von 1,2 bis 1,35, gemessen in $CH_2Cl_2$ bei 25° C und einer Konzentration von 0,5 g Polycarbonat in 100 ml Lösung.

Dies entspricht einem $\overline{M}_w$ (Gewichtsmittelmolekuargewicht, ermittelt durch Ultrazentrifugation oder Streulichtmessung) von 13.000 bis 52.000 , vorzugsweise von 17.000 bis 35.000.

Als Kettenabbrecher zur Einstellung der Molekulargewichte der Poly(ester)carbonate gemäß Komponente A) werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substiutiert sein können, ferner Chloride von aliphatischen Monocarbonsäuren mit bis zu 35 C-Atomen in Mengen von 0,1 bis 10 Mol-% (im Falle von Phenolen bezogen auf Diphenole, im Falle von Säurechloriden bezogen auf Säuredichloride) verwendet.

Bevorzugte aromatische Polycarbonate gemäß Komponente A) sind solche, denen ein oder mehrere der als bevorzugt genannten Diphenole zugrundeliegen. Besonders bevorzugte Polycarbonate sind Copolycarbonate, denen 2,2-Bis-(4-hydroxphenyl)-propan (Bisphenol-A) und einer oder anderen als besonders bevorzugt genannten Diphenol zugrundeliegen. Ganz besonders bevorzugt ist Bisphenol-A-Homopolycarbonat.

Bevorzugte aromatische Polyestercarbonate gemäß Komponente A) sind solche, denen ein oder mehrere der als bevorzugt genannten Diphenole sowie Iso- und/oder Terephthalsäure und ein oder mehrere

Kohlensäurederivate zugrundeliegen.

Thermoplastische Polyurethane gemäß Komponente B) vorliegender Erfindung sind Reaktionsprodukte aus Diisocyanaten, ganz oder überwiegend aliphatischen Oligo-und/oder Polyestern und/oder -ethern sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind entweder bekannt oder können nach bekannten Verfahren (siehe beispielsweise US-PS 3 214 411, J.H. Saunders und K.C. Frisch, "Polyurethanes, Chemistry and Technology", Vol II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung der Oligoester und Polyester sind beispielsweise Adipinsäure, Bernsteinsäure, Subecinsäure, Sebacinsure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Dimethyl-propylenglykol in Betracht. Darüberhinaus können gemeinsam mit den Glykolen kleine Mengen, bis zu 1 Mol-%, tri- oder höher funktionelle Alkohole, z.B. Trimethylolpropan, Glycerin, Hexantriol usw. eingesetzt werden.

Die resultierenden Hydroxyl-oligo-oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt vo ca. 0,01 bis 0.2 %.

Oligoester bzw. Polyester sind auch oligomere oder polymere Lactone, wie beispielsweise Oligo-caprolacton oder Poly-caprolacton, und aliphatische Polycarbonate, wie beispielsweise Poly-butandiol-(1,4)-carbonat oder Polyhexandiol-(1,6)-carbonat.

Ein besonders geeigneter Oligoester der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0.05 %, vorzugsweise 0,01 bis 0,02 liegt.

Oligo- bzw. Polyether zur Herstellung der thermoplastischen Polyurethane gemäß Komponente B) sind beispielsweise solche auf Basis von Tetramethylenglykol, Propylenglykol und Ethylenglkyol.

Polyacetale sind ebenfalls als Polyether zu verstehen und einsetzbar.

Die Oligoether bzw. Polyether sollen mittlere Molekulargewichte $\overline{M}n$ (Zahlenmittel, ermittelt über die OH-Zahl der Produkte) von 600 bis 2000 vorzugsweise von 1000 bis 2000 haben.

Als organisches Diisocyanat wird zur Herstellung der Polyurethane gemäß Komponente B) vorzugsweise 4,4′-Diphenylmethan-diisocyanat verwendet. Es sollte weniger als 5 % 2,4′-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane gemäß Komponente B) verwendet werden, beispielsweise die Diisocyante des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4′-Diphenylens, das 2,2-Diphenylpropan-4,4′-diisocyanat, das Azobenzol-4,4′-diisocyanat, des Diphenylsulfon-4,4′-diisocyanat, das Dichlorhexanmethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylethan-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-β-hydroxy-ethylether, 1,3-Phenylen-bis-β-hydroxyethylether, Bis-(hydroxymethyl-cyclohexan), Hexandiol, Adipinsäure, ω-Hydroxycapronsäure, Thiodiglykol, Ethylendiamin-, Propylen, Butylen-, Hexamethylen-, Cyclohexylen-, Phenylen-,

Toluylen-, Xylylendiamin, Diaminodicyclohexylmethan, Isophorondiamin, 3,3′-Dichlorbenzidin, 3,3′-Dinitrobenzidin, Ethanolamin, Aminopropylalkohol, 2,2-Diemthyl-propanolamin, 3-Aminocyclhoexylalkohol und p-Amiobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane gemäß Komponente B) eingesetzt werden.

Die als Bausteine für die thermoplastischen Polyurethane genannten Diisocyanate, Oligoester, Polyester Polyether. Kettenverlängerer und monofunktionellen Komponenten sind entweder literaturbekannt oder nach literaturbekannten Verfahren erhältlich.

Die bekannte Herstellung der Polyurethan-Komponente B) kann beispielsweise, wie folgt, durchgeführt werden:

So können beispielsweise die Oligo- bzw. Polyester, die organischen Diisocyanate und die Kettenverlängerer für sich vorzugsweise auf eine Temperatur von ca. 50 bis 220° C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann ent weder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B. tertiäre Amine, die in dem US-Patent 2 729 618 genannt werden, zur Anwendung kommen.

Für die Herstellung der Pfropfpolymeren gemäß Komponente C) geeignete vernetzte Dienkautschuke sind vernetzte Polybutadiene und/oder vernetzte Polyisoprene, die bis zu 40 Gew.-% Styrol und/oder Acrylnitril als Co-Monomere enthalten können. Der Gelanteil des als Pfropfgrundlage verwendeten vernetzten Dienkautschuke sollte ≥ 70 Gew.-%, vorzugsweise ≥ 80 Gew.-% (gemessen in Toluol) sein. Die bevorzugte Pfropfgrundlage besteht aus vernetztem Polybutadien.

Pfropfmonomere im Sinne der Erfindung sind aliphatische Ester der Acrylsäure und Methacrylsäure mit bis zu 22 C-Atomen. Bevorzugte Pfropfmonomere sind Ester der Methacrylsäure. Von den Estern der Acrylsäure bzw. Methacrylsäure sind der Methyl-, der Ethyl-, der n-Butyl-,der tert.-Butyl-, der Octyl- und der Ethylhexylester oder deren Mischungen besonders bevorzugt.

Die erfindungsgemäß einzusetzenden Pfropfpolymeren gemäß Komponente C) können nach allen bekannten Polymerisationsverfahren (Emulsions-, Lösungs-, Masse-, Suspen sions-, Fällungspolymerisation), sowie nach Kombination aus diesen Verfahren hergestellt werden. Solche Verfahren sind z.B. in der DAS 1 247 665 beschrieben.

Zur Herstellung der Pfropfpolymeren werden die aufzupfropfenden Monomeren in Gegenwart der vorgebildeten Pfropfgrundlage polymerisiert. Es bildet sich dabei neben dem eigentlichen Pfropfpolymerisat auch freies Homopolymerisat. Unter Pfropfpolymeren wird die Summe der eigentlichen Pfropfcopolymerisate und der freien Polymerisate verstanden. Die Menge des aufgepfropften Monomeren und sein Molekulargewicht kann in weiten Grenzen durch Variation der Polymerisationsbedingungen beeinflußt werden. Hierzu gehören vor allem die Art des Polymerisationsverfahrens,die Temperatur, das Katalysatorsystem, der Molekulargewichtsregler, die Rührbedingungen und die Art der Monomer-Dosierung. Erfindungsgemäß sollte die Pfropfausbeute G > 0,15, vorzugsweise G > 0,40 betragen. Die Pfropfausbeute G bezeichnet das Mengenverhältnis von aufgepfropftem Monomer zur Gesamtmenge der Monomeren in der Pfropfauflage und ist dimensionslos.

Bevorzugtes Polymerisationsverfahren für die erfindungsgemäßen Pfropfpolymeren ist die Emulsionspolymerisation.

Für die Herstellung der Pfropfpolymeren durch Emulsionspolymerisation werden vernetzte, vorzugsweise durch Emulsionspolymerisation gewonnene Butadienpolymerisate als Pfropfgrundlagen bevorzugt. Erfindungsgemäß werden bevorzugt solche Pfropfprodukte, die einen "mittleren Teilchendurchmeeser" $d_{50}$ von 0,2-0,6 µ, vorzugsweise 0,3-0,5 µ, insbesondere ca. 0,4 µ aufweisen, verwendet.

Für die Herstellung der Pfropfpolymeren gemäß Komponente C) können auch Mischungen mehrerer Pfropfgrundlagen eingesetzt werden.

Darüberhinaus können als Komponente C) auch Mischungen von mehreren erfindungsgemäß einzusetzenden Pfropfpolymeren eingesetzt werden.

Besonders bevorzugte Pfropfpolymere gemäß Komponente C) sind solche aus

a) 70-95 Gew.-%, vorzugsweise 75-90 Gew.-% eines vernetzten Polymerisats aus Butadien und/oder substituiertem Butadien, das zumindest aus 95 Gew.-% gegebenenfalls substituierten Butadien-Einheiten aufgebaut ist, als Pfropfgrundlage und

b) 5-30 Gew.-%, vorzugsweise 10-25 Gew.-% von einem oder mehreren Alkyl(meth)acrylaten als aufzupfropfenden Monomeren, wobei der Gelanteil der Pfropfgrundlage ≧ 70 %, vorzugsweise ≧ 80 Gew.-% (in Toluol gemessen), die Pfropfausbeute G > 0,15, vorzugsweise > 40 und der mittlere Teilchendurchmesser der Pfropfgrundlage 0,2-0,6, vorzugsweise 0,3-0,5, insbesondere ca. 0,4 µm betragen soll, und wobei die alkoholische Komponente der (Meth)acrylate 1-5 C-Atome hat.

Die Herstellung der erfindungsgemäßen Formmassen aus den Komponenten A, B und C kann in üblichen Mischaggregaten erfolgen. Als solche sind besonders Extruder und Kneter zu nennen. Dabei können entweder alle drei Komponenten auf einmal oder, je nach Erfordernis, zunächst zwei der Komponenten für sich vermischt und in einem weiteren Arbeitsgang der dritte zulegiert werden.

Mit diesen Compoundierungen kann die Einarbeitung von für Polycarbonate, Polyurethane und/oder Pfropfpolymere geeigneten Hilfs-, Verstärkungsstoffen und/oder Pigmenten in die erfindungsgmeäßen Formmassen verbunden werden, jedoch ist auch die gesonderte Einarbeitung dieser Zusatzstoffe in die Formmassen und/oder die Komponenten A, B und C möglich. Als solche Zusatzstoffe sind im einzelnen u.a. Glas-, Kohlenstoffasern, Fasern von organischen und anorganischen Polymeren, Calciumcarbonat, Talkum, Kieselgel, Quarzmehl, Fließmittel, Entformungsmittel, Stabilisatoren, Ruß und $TiO_2$ zu nennen.

Ein weiterer Gegenstand der Erfindung ist somit die Herstellung von Mischungen enthaltend die Komponenten A), B), C und gegebenenfalls geeignete Hilfsstoffe, Verstärkungsstofef und/oder Pigmente, das dadurch gekennzeichnet ist, daß man die Komponenten A), B), C) und gegebenenfalls geeignete Hilfsstoffe, Verstärkungsstoffe und/oder Pigmente in üblichen Mischaggregaten mischt und das Gemisch über die Schmelze in bekannter Weise homogenisiert und schließlich extrudiert.

Die Verarbeitung der erfindungsgemäßen Mischungen zu Formteilen, Halbzeug, Folien und kann auf den üblichen Verarbeitungsmaschinen, wie Spritzguß- und Extrusionsanlagen, erfolgen.

Gegenstand der vorliegenden Erfindung ist somit auch die Verwendung der erfindungsgemäßen Mischungen zur Herstellung von gegen Treibstoffe resistenten Formkörpern, insbesondere durch Spritzguß oder Extrusion.

Die gegen Treibstoffe resistenten, erfindungsgemäßen Formkörper werden besonders im Kraftfahrzeugbau eingesetzt.

Beispiele

Kennzeichnung der verwendeten thermoplastischen Polyurethane (TPU). $\overline{M}n$ wurde jeweils ermittelt

TPU 1:

Es besaß einen Schmelzbereich von ca. 200-220° C und ein Zahlenmittel-Molgewicht ( $\overline{M}_n$) von 85 700. Es war aus einem Oligoester aus Butylenglykol-1,4 und Adipinsäure ( $\overline{M}_n$ 2000), 4,4-Diphenylmethandiisocyanat und Butandiol-1,4 als Kettenverlängerer aufgebaut. Das Verhältnis von NCO- zu OH-Gruppen betrug 1,03.

TPU 2:

Es besaß einen Schmelzbereich von 190-210° C, ein Zahlenmittel-Molekulargewicht ( $\overline{M}_n$) von 79 300. Es war aus Oligobutylenglykol ( $\overline{M}_n$ 1000, OH-Zahl 112), 4,4-Diphenylmethan-diisocyanat sowie Butandiol-1,4 als Kettenverlängerer hergestellt. Das Verhältnis von NCO-zu OH-Gruppen lag bei 1,03.

Herstellung der verwendeten Pfropfpolymeren

In einem druckfesten Rührgefäß wird eine Lösung aus 80 Gew.-Teilen salzfreiem Wasser, 1,5 Gew.-Teilen Natriumsalz der disproportionierten Abietinsäure und 0,3 Gew-Teilen Kaliumperoxiddisulfat vorgelegt. Nach Verdrängen der Luft durch Stickstoff und Einstellung der Innentemperatur auf 55° C werden 0,35 Gew.-Teile Dedecylmercaptan und X Gew.-Teile Butadien zugesetzt und polymerisiert. Mit absinkender Reaktionsgeschwindigkeit bei fortschreitender Polymerisation wird die Temperatur langsam auf 68° C angehoben. (X entspricht den Werten von Tabelle 1).

Nach beendeter Polymerisation werden geringe Mengen des nicht umgesetzten Butadiens durch Ausrühren des erhaltenen Latex unter vermindertem Druck entfernt.

175 Gew.-Teile entsalztes Wasser und 0,3 Gew.-Teile Kaliumperoxidsulfat werden zugesetzt.

Nach Verdrängen der Luft durch Stickstoff und Erwärmen auf 65° C werden 2 Gew.-Teile Emulgator (Na-Salz der disproportionierten Abietinsäure oder Alkylsulfonate), gelöst in 25 Gew.-Teilen Wasser sowie Y Gew.-Teile der in Tabelle 1 angegebenen Monomeren zugesetzt. (Y entspricht den Werten der Tabelle 1).

Die Zulaufdauer beträgt ca. 4 Stunden. Zur Vervollständigung der Reaktion wird nach beendetem Zulauf noch 2 Stunden bei 65° C weiter gerührt.

Der so erhaltene Pfropfpolymer-Latex wird nach Zusatz von 1 Gew.-Teil eines phenolischen Antioxidans (2,6-Di-tert.-butyl-p-kresol) mit 2 %iger $MgSO_4$/Essigsäure-Lösung (Mischungsverhältnis 1:1 Gew.-Teile) koaguliert, das Koagulat abgetrennt, salzfrei gewaschen und bei 70° C im Vakuum getrocknet.

Die Zusammensetzung der Pfropfpolymeren ist der Tabelle 1 zu entnehmen.

Tabelle 1

| Zusammensetzung der Pfropfprodukte | | | |
|---|---|---|---|
| Typ | Gew.-Teile Polybutadien X | Gew.-Teile Pfropfmonomeres Y | mittlerer Teilchendurchmesser µm |
| A | 80 | 20 MMA/n-BA (9:1) | 0,4 |
| B | 80 | 20 S/AN (72/28) | 0,4 |
| C | 80 | 20 MMA | 0,4 |
| D | 60 | 40 MMA | 0,4 |
| E | 80 | 20 MA | 0,4 |

n-BA = n-Butylacrylat
t-BA = tert.-Butylacrylat
S = Styrol
AN = Acrylnitril
MMA = Methylmethacrylat
MA = Methylacrylat

Die Zusammensetzungen der hergestellten Mischungen sowie ihre Eigenschaften gehen aus Tabelle 2 hervor. Die Mischungen wurden in einem Doppelschneckenextruder Typ ZSK 32 der Firma Werner und Pfleiderer compoundiert. Die in der Masse erreichten maximalen Temperaturen sind in Tabelle 2 aufgenommen worden. Aus den compoundierten Mischungen wurden nach dem Spritzgießverfahren zur Beurteilung der Abschieferung bei Knicken sowie der Oberfläche Prüfstäbe der Abmessungen 127x12,7x4 mm hergestellt.

Zur Beurtelung der Fließnahtschatten wurden Normkleinstäbe (DIN 53 542) an beiden enden angespritzt (Zylinder-Durchmesser 30 mm, 900 bar).

Für die Versuche wurde ein Polycarbonat (PC) auf Basis BPA (2,2-Bis(-4-hydroxyphenyl)-propan) der relativen Lösungsviskosität ($\eta_{rel}$) 1,247 verwendet, gemessen an einer Lösung vo 0,5 g Polycarbonat in 100 ml $CH_2Cl_2$-Lösung bei 25° C.

Die Knickung der Prüfstäbe zur Beruteilung der Abschieferung und der Wechselknickfestigkeit bis zum Bruch erfolgte von Hand um jeweils 180° C in beiden Richtungen.

Die Beurteilung der Abschieferung, der Prüfstaboberfläche und der Fließnahtschatten erfolgte nach Augenschein durch Vergleich. Es bedeuten in Tabelle 2

| | |
|---|---|
| - | nicht feststellbar, |
| + | gerade wahrnehmbar, |
| + + | erheblich feststellbar, |
| + + + | sehr stark feststellbar. |

Zur Beurteilung der Treibstoffestigkeit wurden Prüfstäbe (nach Spritzgießverhalten hergestellt) der Abmessungen 80x10x4 mm dem Schablonentest (W. Kaufmann, Bestimmung der Chemikalienbeständigkeit von Kunststoffen unter mechanischer Spannung, Kunststoffe 65 (1975) S. 155-157) unterworfen. Dabei wurden Randfaserdehnungen von 1 % eingestellt. Als Prüfflüssigkeit diente gemäß DIN 51 604, Teil 1 eine Mischung aus:

| | | |
|---|---|---|
| 50 | Vol-% | Toluol, |
| 30 | Vol-% | ISO-Oktan, |
| 15 | Vol-% | Disobutylen, |
| 5 | Vol-% | Ethanol. |

Die Prüfung wurde wie folgt durchgeführt:

1. Zyklus:

Auf die Biegeschablonen mit aufgebrachter Probe einen mit der Prüfflüssigkeit getränkten Wattebausch gelegt und 15 Minuten einwirken lassen. Probe dann 15 Minuten ablüften lassen.

2. Zyklus:

Entspricht dem 1. Zyklus.

Auswertung:

Nach Beendigung des 2. Zyklus wird die von der Schablone genommene Probe mit bloßem Auge betrachtet und wie folgt bewertet:

| Stufe: | Merkmal: |
|---|---|
| 1 | Keine sichtbare Veränderung |
| 2 | Oberfläche vermattet |
| 3 | Feine Risse |
| 4 | Starke Risse, Bruch |

Als Polyestercarbonat (mit Estergehalt von 30 Mol-%) wurde das in Beispiel 3 EP 36 080 beschriebene Produkt eingesetzt.

Mit Stern gekennzeichnete Beispiele stellen Vergleichsversuche dar.

Tabelle 2

| Beispiel | PC Gew.-% | TPU | | Pfropfprodukt | | Compoundier-Temperatur °C | Abschieferungen | Wechelknickfestigkeit, Zahl der Knickungen bis zum Bruch | Aussehen der Oberfläche Flecken | Fließnaht-Schatten | Treibstofffestigkeit, Randfaserdehnung 1 % Stufe |
|---|---|---|---|---|---|---|---|---|---|---|---|
| | | Typ | Gew.-% | Typ | Gew.-% | | | | | | |
| *1 | 80 | 1 | 20 | - | - | 240 | ++ | 3 | ++ | ++ | 2-3 |
| *2 | 80 | 2 | 20 | - | - | 240 | + | 4 | ++ | ++ | 2-3 |
| 3 | 75 | 1 | 15 | A | 10 | 235 | - | 23 | - | - | 1-2 |
| 4 | 70 | 1 | 20 | A | 10 | 235 | - | 27 | - | - | 1-2 |
| 5 | 75 | 1 | 15 | C | 10 | 235 | + | 18 | - | - | 1-2 |
| *6 | 75 | 1 | 15 | B | 10 | 235 | ++ | 7 | ++ | ++ | 2-3 |
| *7 | 75 | 1 | 15 | D | 10 | 235 | + | 11 | + | + | 2 |
| 8 | 75 | 2 | 15 | A | 10 | 235 | - | 26 | - | - | 1-2 |
| 9 | 70 | 2 | 20 | C | 10 | 235 | - | 25 | - | - | 1-2 |
| 10 | 75 | 1 | 15 | E | 10 | 235 | - | 21 | - | - | 1-2 |
| *11 | 75 | 1 | 15 | 10 % MZA-EPDM Beispiel 3 EP 125 739 | | 235 | ++ | 9 | ++ | + | 3 |
| *12 | 75 | 1 | 15 | 10 % MA-EPDM Beispiel 9 EP 125 739 | | 235 | ++ | 7 | ++ | ++ | 2-3 |
| 13 | 75 Polyestercarbonat | 1 | 15 | A | 10 | 240 | -- | 21 | -- | -- | 1-2 |

## Ansprüche

1. Mischungen enthaltend
A) 45 bis 87 Gew.-% thermoplastischer, aromatischer Poly(ester)carbonate,
B) 30 bis 12 Gew.-% thermoplastischer Polyurethane und
C) 25 bis 1 Gew.-% Pfropfpolymerer, erhältlich durch bekannte Pfropfung von
C1) 5 bis 30 Gew.-Teilen (Meth)Acrylsäurealkylestern auf
C2) 95 bis 70 Gew.-Teile an vernetzten Dienkautschuken wobei die Summe aus C1) + C2) jeweils 100 Gew.-Teile beträgt, und wobei der mittlere Teilchendurchmesser $d_{50}$ der vernetzten Dienkautschuke C2) von 0,2 µm bis 0,6 µm ist.

2. Mischungen gemäß Anspruch 1, enthaltend
A) 55 bis 82 Gew.-% Poly(ester)carbonat,
B) 25 bis 12 Gew.-% Polyurethan und
C) 20 bis 6 Gew.-% Pfropfpolymer.

3. Mischungen gemäß Anspruch 1, dadurch gekennzeichnet, daß die Komponente C) durch Pfropfung von 10 bis 30 Gew.-Teilen C1) auf 90 bis 70 Gew.-Teile C2) hergestellt wird.

4. Mischungen gemäß Anspruch 1, dadurch gekennzeichnet, daß der mittlere Teilchendurchmesser $d_{50}$ von C2) von 0,3 µm bis 0,5 µm ist.

5. Mischungen gemäß Anspruch 2, dadurch gekennzeichnet, daß der mittlere Teilchendurchmesser 0,4 µm ist.

6. Mischungen gemäß Anspruch 1, dadurch gekennzeichnet, daß die Mischungen zusätzlich geeignete Hilfsstoffe, Verstärkungsstoffe und/oder Pigmente enthalten.

7. Verfahren zur Herstellung der Mischungen der Ansprüche 1 bis 6, dadurch gekennzeichnet, daß man die Komponenten und gegebenenfalls geeignete Hilfsstoffe, Verstärkungsstoffe und/oder Pigmente in üblichen Mischaggregaten mischt und das Gemisch über die Schmelze in bekannter Weise homogenisiert und schließlich extrudiert.

8. Verwendung der Mischungen der Ansprüche 1 bis 6 zur Herstellung von gegen Treibstoffe resistenten Formkörpern.